# EUROPEAN PATENT SPECIFICATION

(11) **EP 2 199 168 B1**
(45) Date of publication and mention of the grant of the patent: **15.11.2017**
(21) Application number: 08171738.1
(22) Date of filing: 16.12.2008
(51) Int. Cl.: B60W 20/00, B60W 30/18, B60K 6/48, B60K 6/52, B60W 10/06, B60W 10/08

(54) **Autonomous transaxle**
Autonomes Getriebe
Boîte-pont autonome

(43) Date of publication of application: 23.06.2010
(73) Proprietor: Volvo Car Corporation, 405 31 Göteborg (SE)
(72) Inventor: Stenvall, Lars, 45991, Ljungskile (SE)
(74) Representative: Valea AB

(56) References cited:
- EP-A- 1 464 527
- EP-A- 1 571 751
- EP-A2- 1 466 774
- WO-A-02/072375
- WO-A-2008/011959
- WO-A2-2007/118082
- DE-A1-102005 026 874
- US-B1- 6 349 782

## Description

### TECHNICAL FIELD

The present invention relates to a hybrid electric vehicle.

### BACKGROUND

Today hybrid vehicles powered by combustion engines and electric motors are well known in the art of motor vehicle design. The general aim of such a hybrid vehicles is to achieve better fuel economy compared to conventional vehicles powered by a combustion engine alone.

The typical hybrid electric vehicle combines a conventional propulsion system powered by a combustion engine and an electrical propulsion system powered by one or several electrical machines supplied by a rechargeable battery or similar. Typically, the different propulsion systems share mechanical subsystems or components, making the design and the operational control of the mechanical subsystems or components increasingly complicated.

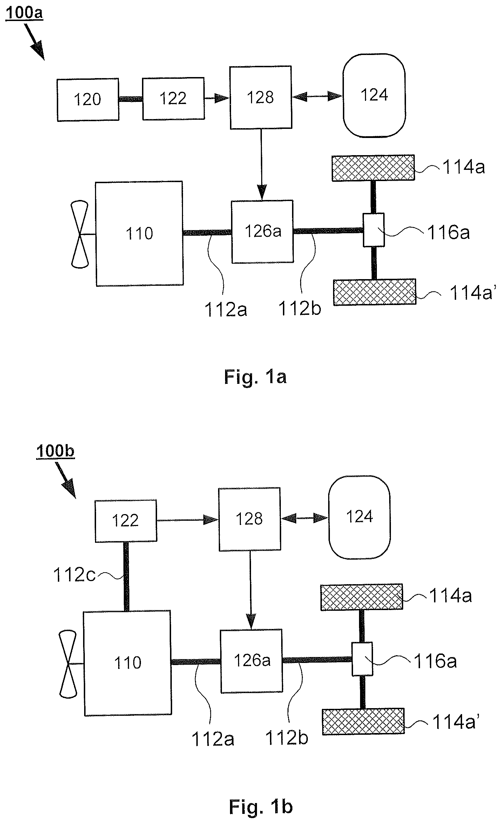

Typical hybrid electric vehicles may have various configurations. A number of exemplifying configurations are described below with reference to Fig. 1a-1c. However, it should be emphasised that the present invention is not limited to the configurations shown in Fig. 1a-1c or similar. On the contrary, the invention is applicable to substantially any hybrid electrical vehicle, including those with a combustion engine as suggested above. Other examples may e.g. comprise a hydraulic engine or similar and one or several electrical machines.

Figure 1a shows a schematic illustration of an exemplifying powertrain 100a of a typical hybrid electric vehicle (not shown). The exemplifying powertrain 100a comprises a first propulsion system with an engine 110, e.g. a conventional internal combustion engine or similar. The engine 110 is connected via an axle arrangement 112a, 112b to the wheels 114a, 114a' of the vehicle, such that power can be transferred from the engine 110 to the wheels 114a, 114a'. Furthermore, the exemplifying powertrain 110a comprises a second propulsion system. The second propulsion system comprises an auxiliary power unit 120 (e.g. a small combustion engine) connected to an alternator 122 configured to charge an on-board battery 124. The on-board battery 124 is configured to power an electric motor 126a being connected to said axle arrangement 112a, 112b for providing power to the wheels 114a, 114a'. The operation of the electrical second propulsion system is typically controlled by a control unit 128 configured to communicate the appropriate amounts of electric power between the alternator 122, the battery 124 and the electric motor 126a. It should be clarified that clutch arrangements or gear arrangements or similar may be included in the axle arrangement 112a, 112b. For example, a differential 116a may be required to distribute the power from the axle arrangement 112a, 112b to the wheels 114a, 114a' in an appropriate manner.

Figure 1b shows a schematic illustration of another exemplifying powertrain 100b of a typical hybrid electric vehicle (not shown). The powertrain in Fig. 1b has no auxiliary power unit 120. Instead the alternator 122 is connected to the combustion engine 110 via an axle arrangement 112c. Naturally, this may require that a clutch arrangement or gear arrangement or similar is included in the axle arrangement 112c.

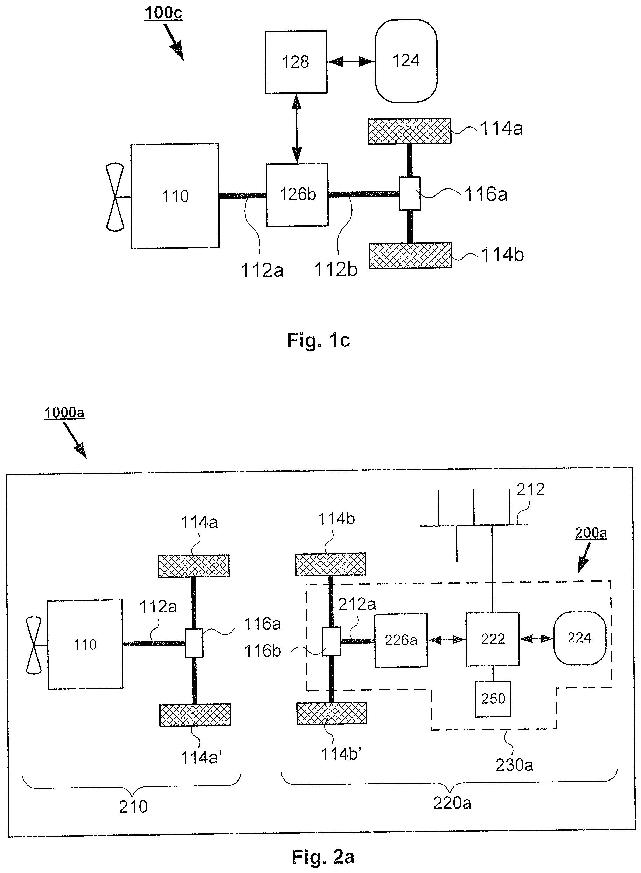

Figure 1c shows a schematic illustration of yet another exemplifying powertrain 100c of a typical hybrid electric vehicle (not shown). The powertrain in Fig. 1c has no auxiliary power unit 120. Instead the electrical motor 126a is replaced by an electric machine 126b connected to the axle arrangement 112a, 112b in the same or similar manner as the electric motor 126a. The term "electric machine" should be understood as a term for an electric motor and/or generator, i.e. the electric machine can be driven by electricity to supply an output torque to an axle arrangement or be mechanically driven to produce electricity by receiving torque from an axle arrangement. It follows that the electric machine 126b can receive power from the battery 124 to power the axle arrangement 112a, 112b as well as receive power from the axle arrangement 112a, 112b to charge the battery 124.

It is clear from the exemplifying configurations illustrated in Fig. 1a-1c that several axle arrangements 112a, 112b, 112c may be required to accomplish a combination of a first conventional propulsion system and a second electric propulsion system. In addition, the axle arrangements 112a, 112b, 112c may require additional clutch arrangements or gear arrangements to accomplish a proper cooperation between the engine 110, the electric motor/machine 126a/126b and a possible auxiliary power unit 122. This will inevitably result in a complicated, heavy, voluminous and expensive design. Moreover, the various axle arrangements, possibly including clutch arrangements or gear arrangements or similar, will result in power losses e.g. due to friction etc.

Moreover, the connectors such as cables or similar between the battery 124, the control unit 128 and the electric motor/machine 126a/126b will carry high voltage electric power, e.g. approximately 50-150 V or even higher depending on the design of the hybrid electric vehicle and the second propulsion system as indicated above. Since high voltage of this kind is dangerous to people it is necessary to isolate the cables or similar from the environment. This is particularly complicated in case of a collision, since isolations may then break and expose high voltage cables to the environment. To solve this problem it is common to use complicated shutdown and confining systems to sense a collision and separate the battery 124 from the other parts of the vehicle. Moreover, since high voltage cables often extends into the engine compartment of the vehicle and other compartments outside the battery it follows that the service technicians are exposed to a higher risk and they may need special training for handling the high voltage cables during service.

WO 2007/118082, which is considered as the closest prior art, discloses an electric propulsion module supplements which may be added to pre-existing vehicles to upgrade them or to be used as a component for new designs of all electric or hybrid vehicles. The electric propulsion module forms a self-supporting unit that includes two motors, controllers and electric power components which can be attached to suspension features of a vehicle. Torque can be selectively transferred between the motors by an electromagnetic clutch.

Hence, there is a need for an improved hybrid electric vehicle wherein at least one of the drawbacks mentioned above is eliminated or mitigated.

### SUMMARY

An object of the present invention is to eliminate or mitigate at least one of the drawbacks identified above.

This has been accomplished by a first embodiment of the invention directed to a transaxle arrangement adapted to be operatively mounted in an electrical vehicle. The transaxle arrangement comprises an electric power storage arrangement, and an electric machine arrangement. The wheel arrangement is not necessarily a part of the transaxle arrangement. The electric machine arrangement is adapted to operatively receive in a first phase electric power from the power storage arrangement so as to provide mechanical power to the wheel arrangement and drive the vehicle, and adapted to operatively receive in a second phase mechanical power from the wheel arrangement so as to provide charging electric power to the electric power storage arrangement when the vehicle is driven.

The transaxle arrangement further comprises a first axle arrangement adapted to transfer mechanical power between the electric machine arrangement and a first wheel of the vehicle, and a second axle arrangement adapted to transfer mechanical power between the electric machine arrangement and a second wheel of the vehicle The electric machine arrangement comprises a first electrical machine connected to the first axle arrangement, and a second electrical machine connected to the second axle arrangement such that the two electric machines are positioned substantially along a centre axis passing through the first wheel and the second wheel when the transaxle arrangement is operatively arranged in the vehicle. The transaxle arrangement is confined such that high voltage parts of the transaxle arrangement, when it is operatively mounted on the vehicle, becomes electrically isolated from the rest of the vehicle. The high voltage parts are arranged in an electrically insulating casing so as to substantially enclose the high voltage parts of the transaxle arrangement. The high voltage parts comprise the electric machine arrangement. The high voltage parts does not extend or comes into contact with the other part of the vehicle when they are electrically isolated. The high voltage parts further comprise the electrical power storage arrangement.

Said transaxle arrangement and said wheel arrangement may form a first propulsion system configured to operatively drive the electrical vehicle referred to above. The electrical vehicle may have a second propulsion system comprising a second wheel arrangement and an engine configured to operatively provide mechanical power to the second wheel arrangement so as to drive the vehicle.

A second embodiment of the invention, comprising the features of the first embodiment, is directed to a transaxle arrangement that is adapted to be operatively mounted in the front half part, or the front third part or the front fourth part of the vehicle, or in the rear half part, the third rear part or the fourth rear part of the vehicle.

A third embodiment of the invention, comprising the features of the first embodiment, is directed to a transaxle arrangement that is adapted to be detachably mounted on the vehicle.

A fourth embodiment of the invention, comprising the features of the first embodiment, is directed to a transaxle arrangement in which the power storage arrangement is detachably mounted.

A fifth embodiment of the invention, comprising the features of the first embodiment, is directed to a transaxle arrangement configured such that the mechanical power transferring parts of the transaxle arrangement, when it is operatively mounted on a vehicle, becomes mechanically separated from mechanical power transferring parts of the vehicle.

An sixth embodiment of the invention, comprising the features of the first embodiment, is directed to a transaxle arrangement wherein the insulating casing is adapted to operatively fit to at least one of: the chassis or the body of a vehicle so as substantially enclose the high voltage parts of the transaxle arrangement.

A seventh embodiment of the invention, comprising the features of the first embodiment, is directed to a transaxle arrangement wherein the high voltage parts further comprise at least one of:
an electrical power converter, or an on board battery charger, or a climate equipment.

A eight embodiment of the invention is directed to an electrical vehicle comprising a transaxle arrangement comprising the features of any one of the first, the second, the third, the fourth, the fifth, the sixth or the seventh embodiment.

In addition, at least one of the drawbacks identified above has been eliminated or mitigated by a ninth embodiment of the invention. The ninth embodiment is directed to a method for operating a transaxle arrangement comprising an electric power storage arrangement, a first electric machine and a first axle arrangement adapted to transfer mechanical power between the first electric machine and a first wheel of the vehicle, and second electric machine and a second axle arrangement adapted to transfer mechanical power between the second electric machine and a second wheel of the vehicle. The two electric machines are positioned substantially along a centre axis passing through the first wheel and the second wheel when the transaxle arrangement is operatively arranged in the vehicle. The transaxle arrangement is confined such that high voltage parts of the transaxle arrangement, when it is operatively mounted on the vehicle, becomes electrically isolated from the rest of the vehicle. The method comprises the step of mounting the transaxle arrangement in an electrical vehicle and arranging the high voltage parts in an electrically insulating casing so as to substantially enclose the high voltage parts of the transaxle arrangement, wherein the high voltage parts comprise the electric machine arrangement, and the high voltage parts does not extend or comes into contact with the other part of the vehicle when they are electrically isolated. The high voltage parts further comprise the electrical power storage arrangement.

The transaxle arrangement and the wheel arrangement mentioned above may form a first propulsion system configured to operatively drive the electrical vehicle referred to above. The electrical vehicle may have a second propulsion system comprising a second wheel arrangement and an engine configured to operatively provide mechanical power to the second wheel arrangement so as to drive the vehicle.

A tenth embodiment of the invention, comprising the features of the ninth embodiment, is directed to a method comprising the steps of:
- in a first phase providing the electric machine arrangement with electric power from the power storage arrangement so as to provide mechanical power to a wheel arrangement of the vehicle so as to drive the vehicle, and
- in a second phase receiving mechanical power from the wheel arrangement when the vehicle is driven so as to provide charging electric power to the electric power storage arrangement.
A eleventh embodiment of the invention, comprising the features of the ninth embodiment, is directed to a method comprising the steps of: mounting the transaxle arrangement in the front half part, or the front third part or the front fourth part of the vehicle, or in the rear half part, the third rear part or the fourth rear part of the vehicle.

A twelfth embodiment of the invention, comprising the features of the ninth embodiment, is directed to a method comprising the steps of: mounting the transaxle arrangement in a detachable manner.

A thirteenth embodiment of the invention, comprising the features of the ninth embodiment, is directed to a method comprising the steps of: mounting the power storage arrangement in the transaxle arrangement in a detachable manner.

A fourteenth embodiment of the invention, comprising the features of the ninth embodiment, is directed to a method comprising the steps of: configuring the transaxle arrangement such that the mechanical power transferring parts of the transaxle arrangement is mechanically separated from mechanical power transferring parts of the vehicle.

A fifteenth embodiment of the invention, comprising the features of the ninth embodiment, is directed to a method comprising the steps of: fitting the insulating casing to at least one of: the chassis or the body of the vehicle so as to substantially enclose the high voltage parts of the transaxle arrangement.

A sixteenth embodiment of the invention, comprising the features of the ninth embodiment, is directed to a method comprising the steps of: arranging as a high voltage part at least one of:
an electrical power converter, or an on board battery charger, or a climate equipment.

Further advantages of the present invention and embodiments thereof will appear from the following detailed description of the invention.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
- Fig. 1a: is a schematic illustration of an exemplifying powertrain 100a in a hybrid electric vehicle (not shown),
- Fig. 1b: is a schematic illustration of another exemplifying powertrain in a hybrid electric vehicle (not shown),
- Fig. 1c: is a schematic illustration of yet another exemplifying powertrain 100c in a hybrid electric vehicle (not shown),
- Fig. 2a: is a schematic illustration of an improved combination of a first propulsion system 210 and a second electric propulsion system 220a implemented in a vehicle 1000a,
- Fig. 2b: is a schematic illustration of an improved combination of a first propulsion system 210 and another second electric propulsion system 220b implemented in a vehicle 1000b,
- Fig. 3: is a flowchart of a method according to an embodiment of the invention.

### DETAILED DESCRIPTION OF PREFERRED EMBODIMENTS

### Features in embodiments

The invention deals with problems in hybrid electrical vehicles caused by the complicated, heavy, voluminous and/or expensive mechanical powertrain required to accomplish a combination of a first propulsion system and a second electric propulsion system.

In view of the above a first embodiment of the present invention schematically shown in Fig. 2a provides an improved combination of a first propulsion system 210 and a second electric propulsion system 220a implemented in a vehicle 1000a.

The vehicle 1000a may be an automobile or a motor car, e.g. a passenger car or similar. However, embodiments of the invention can be implemented in other wheeled motor vehicles that carries its own propulsion system(s), e.g. two wheeled or three wheeled mopeds and/or motorcycles and lorries or trucks or similar.

As can be seen in Fig. 2a it is preferred that the first propulsion system 210 comprises an engine 110 (e.g. an internal combustion engine or similar) that is connected via an axle arrangement 112a to a first pair of wheels 114a, 114a' (e.g. the front wheels or the rear wheels of the vehicle 1000a), such that mechanical power can be transferred from the engine 110 to the wheels 114a, 114a'. As is well known in the art, the axle arrangement 112a may comprise a clutch arrangement and/or a gear arrangement to reduce the direct mechanical coupling between the engine 110 and the wheels 114a, 114a'. Similarly, as is also well known in the art, a differential 116a may be required to appropriately distribute power from the axle arrangement 112a to the wheels 114a, 114a'.

As can be further seen in Fig. 2a it is preferred that the second propulsion system 220a comprises an electrical machine 226a connected via an axle arrangement 212a or a similar transfer means to a second pair of wheels 114b, 114b' of the vehicle 1000a (e.g. the rear wheels if the engine 110 is arranged in the front or the front wheels if the engine 110 is arranged in the rear) such that mechanical power can be transferred between the machine 226a and the wheels 114b, 114b'. A differential 116b or a similar power distributing arrangement may be required to appropriately distribute power from the axle arrangement 212a to the wheels 114b, 114b'. In addition, the second propulsion system 220a comprises an electrically chargeable on-board electric power storage 224 (e.g. a battery or similar) being connected to the electric machine 226a such that electric power can be transferred between the power storage 224 and the electric machine 226a. It should be added the axle arrangement 212a is merely an example and other transfer means may indeed be used to transfer mechanical power between the electric machine 226a and the wheels 114b, 114b', e.g. any mechanical means known by the skilled person to be suitable for the purpose at hand.

As previously indicated in the background section, the term "electric machine" should be understood as a term for an electric motor and/or generator, i.e. the electric machine can be driven by electricity to supply an output torque or similar to an axle arrangement, or be mechanically driven to supply charging electricity by receiving torque or similar from an axle arrangement.

The operation of the electrical second propulsion system 220a is preferably controlled by a control unit 222 configured to communicate the appropriate amounts of electric power between the electric machine 226a and the power storage 224. The control unit 222 may e.g. be formed by one or several dedicated software and/or hardware units, and /or it may be formed by parts of the general control functions of the vehicle 1000a. It is preferred that the control unit 220 has access to the required status of the vehicle, e.g. the current status of user controls (e.g. gas pedal, brake pedal, gear actuation, steering wheel actuation etc.), the current status of the combustion engine 110, the electrical machine 226a, the power storage 224, possible dynamic stability and traction control systems and/or anti-lock systems connected to the wheels 114a, 114a' and/or 114b, 114b' etc. As is well known to those skilled in the art, such information can be readily measured by means of on-board sensors or similar and then made available on a communication channel 212 (e.g. a CAN-bus or similar) of the vehicle 1000a to which the control unit 222 is connected. The detailed control of the propulsion, traction and possible regenerative braking etc of the second propulsion system 220a is not a part of the present invention and it is therefore not described here.

From the above it is clear that that the electric machine 226a is configured such that it in one phase can receive electrical power from the power storage 224 to power the axle arrangement 212a, and such that it in another phase can receive mechanical power from the axle arrangement 212a to provide charging electric power to the power storage 224. In other words, the electric machine 226a is configured to be mechanically powered by at least one wheel 114b, 114b' via the axle arrangement 212a and a possible differential 116b or similar mechanical power transferring means so as to charge the electric power storage 224 while said at least one wheel 114b, 114b' is propelled by the road or similar surface on which the vehicle 1000a is driven by at least one other wheel 114a, 114a' mechanically powered by the combustion engine 110 of the vehicle. Hence, the power storage 224 can be charged without any auxiliary power unit (c.f. the auxiliary power unit 120 in Fig. 1a) Similarly, the power storage 224 can be charged without any dedicated charging axle arrangement (c.f. the dedicated axle 112c in Fig. 1b) or any common axle arrangement for the engine 110 and the electric machine 226a (c.f. the common axle 112a, 112b in Fig. 1c).

Indeed, the mechanical separation of the first propulsion system 210 from the second propulsion system 220a as described above provides a less complicated, lighter and less voluminous design with a reduced number of mechanical parts compared to designs like those described in the background section with reference to Fig. 1a-1c.

According to a further embodiment of the invention - enabled by the mechanical and spatial separation of the first propulsion system 210 from the second propulsion system 220a - it is preferred that at least the axle arrangement 212a, the electric power storage 224, the electric machine 226a and the control unit 222 (or at least the high voltage parts of the control unit 222) are grouped into an autonomous transaxle unit 200a. Preferably, both the power storage 224 and the electric machine 226a are utilizing a high voltage.

As is well known in the art, a transaxle is a component that combines into one integrated assembly a transmission function, a possible differential function (e.g. in case of two driven wheels) and the function of a drive axle. A transaxle function is almost mandatory in all automobile configurations, particularly those that have the engine placed at the same end of the car as the driven wheels.

It should be added that the transaxle unit 220a in Fig. 2a may also comprise a possible differential arrangement, e.g. such as the differential 116b. Similarly, the transaxle unit 220a may include parts of such axle arrangements that extend from a possible differential 116b or similar to the wheels 114b, 114b'.

In particular, it is preferred that the transaxle unit 200a is confined such that parts of the transaxle 200a comprising, using and/or transferring high voltage power are electrically isolated, particularly from the rest of the vehicle 1000a. These high voltage parts are primarily the electric power storage 224 and the electric machine 226a explicitly shown in Fig. 2a. However, high voltage parts may also include other high voltage units illustrated by a box 250, e.g. such as electrical power converters (e.g. DC-AC converters, DC-DC converters), but also high voltage AC-compressor (or some other or similar climate equipment for providing heat and/or cold into the passenger compartment of the vehicle) and/or an on board battery charger for charging the battery 224 from the electric power grid (cf. the so-called plug-in-hybrids). In addition, the high voltage parts may e.g. also comprise conductors and switches and similar parts of the transaxle 200a that transfer high voltage power between components of the transaxle 200a, e.g. the high voltage parts of the control unit arrangement 222.

It should be specified that high voltage may be an electric power above approximately 50V, or above approximately 75V, or above approximately 100V, or above approximately 125V, or above approximately 150V, or above approximately 175V, or above approximately 200V or even higher depending on the design of the hybrid electric vehicle 1000a and the second propulsion system 220a. Indeed, voltages above approximately 50 volts may cause dangerous amounts of current to flow through a human touching two points of a circuit. Hence, safety standards generally are more restrictive where the chance of contact with such high voltage circuits exists. In other words, high voltage in connection with the present invention should be understood in this context.

To achieve an electric isolation of the transaxle unit 200a it is preferred that the transaxle unit 200a (or at least the high voltage parts of the transaxle unit 200a) is kept electrically isolated within a *limited volume* of the vehicle 1000a. The transaxle unit 200a may e.g. be arranged in the front half, third or fourth part of the vehicle 1000a, or in the rear half, third or fourth part of the vehicle 1000a such that no high voltage parts of the transaxle 200a extends or comes into contact with the other part of the vehicle 1000a. The transaxle unit 200a may e.g. be arranged in an electrically insulating casing 230a. Such a casing 230a may have openings for axle arrangements etc. The casing 230a may also have closable openings for service purposes etc. Some openings may be transparent for an air flow but still electrically insulating, e.g. by means of a net arrangement or similar. In some embodiments the casing 230a may be at least partly formed by the chassis or the body of the vehicle 1000a.

Embodiments of the invention may e.g. provide a transaxie unit 200a in the form of a *separate unit* that can be detachably mounted on the vehicle 1000a as a single unit, preferably such that the wheels can be attached to the transaxle unit 200a at a later stage. Hence, the separate transaxle unit 200a supports a so-called auto-decking assembly. This provides a modularity that makes it very easy to assemble a range of different combinations of vehicles. It also provides a particularly fast assembly procedure. In addition, the transaxle units can be provided in a pre-manufactured state to the end assembly site. It is preferred that the separate transaxle unit 200a comprises an insulating casing 230a that substantially encloses the high voltage parts of the transaxle unit 200a.

Similarly, embodiments of the present invention may have the electric power storage 224 detachably mounted in the transaxle arrangement 200a, 200b. This provides particular advantages if the battery technology etc evolves rapidly during the coming years. It may indeed be desirable to replace an old electric power storage with a modern more efficient electric power storage to boost the capacity of an old vehicle, which can be achieved if the power storage 224 is detachably mounted.

The formation of a transaxle 200a as described above provides a simpler, lighter and less voluminous design with a reduced number of mechanical parts. In addition, it increases the modularity of the vehicle design 1000a. Moreover, the spatially and electrically confined embodiment of the transaxle unit 200a increases the safety for technicians and others handling the vehicle 1000a. In addition, the spatially and electrically confined transaxle 200a does not need a sensor-based system or similar to electrically isolate its high voltage parts from the environment in case of collision or similar, since the high voltage parts are spatially and electrically confined at the outset. As contrast, in case of a collision or similar, the high voltage parts in known hybrid electric vehicles are typically disconnected and/or shutdown by various sensor-based systems, which requires complicated systems and analysis to distinguish between ordinary but challenging operation events and an actual collision event.

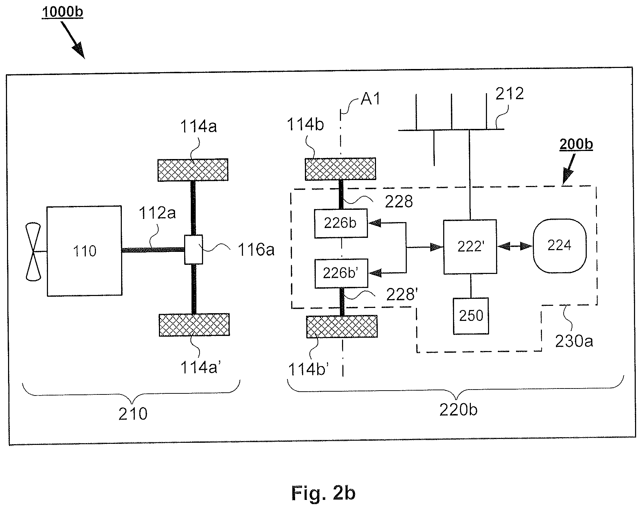

The attention is now directed to Fig. 2b showing a schematic illustration of another improved combination of a first propulsion system 210 and another second electric propulsion system 220b implemented in a vehicle 1000b.

As can be seen in Fig. 2b it is preferred that the first propulsion system 210 is the same as described above with reference to Fig. 2a.

It is also preferred that the second propulsion system 220b is the same or similar as described above with reference to Fig. 2a. However, as can be seen in Fig. 2b it is preferred that the second propulsion system 220b comprises two electrical machines 226b, 226b' each connected via an axle arrangement 228, 228' to a wheel 114b, 114b' respectively of the vehicle 1000b (e.g. the rear wheels if the engine 110 is arranged in the front or the front wheels if the engine 110 is arranged in the rear) such that mechanical power can be transferred between the machines 226b, 226b' and the wheels 114b, 114b'. It is also preferred that the second propulsion system 220b comprises the same chargeable on-board electric power storage 224 as described with reference to Fig. 2a. The power storage 224 is connected to the electric machines 226b, 226b' such that electric power can be transferred between the power storage 224 and the electric machines 226b, 226b'.

The operation of the electrical second propulsion system 220b is preferably controlled by a control unit 222' being the same or similar as the control unit 222 previously described with reference to Fig. 2a. The control unit 222' is configured to communicate the appropriate amounts of electric power between the power storage 224 and the two electric machines 226b, 226b'. The detailed control of the propulsion, traction and possible regenerative braking etc of the second propulsion system 220b is not a part of the present invention and it is therefore not described here.

From the above it is clear that the electric machines 226b, 226b' are configured such that they in one phase can receive electrical power from the power storage 224 to power the wheels 114b, 114b' respectively, and such that they in another phase can receive mechanical power from the 114b, 114b' respectively to provide charging electric power to the power storage 224. In other words, at least one electric machine 226b, 226b' is configured to be mechanically powered by at least one wheel 114b, 114b' so as to charge the electric power storage 224 while said at least one wheel 114b, 114b' is propelled by the road or similar surface on which the vehicle 1000a is driven by at least one other wheel 114a, 114a' mechanically powered by the combustion engine 110 of the vehicle.

Hence, the power storage 224 can be charged without any auxiliary power unit (c.f. the auxiliary power unit 120 in Fig. 1a). Similarly the power storage 224 can be charged without any dedicated charging axle arrangement(c.f. the dedicated axle 112c in Fig. 1b) or any common axle arrangement for the engine 110 and the electric machines 226b, 226b' (c.f. the common axle 112a, 112b in Fig. 1c).

The mechanical separation of the first propulsion system 210 from the second propulsion system 220b as described above provides a less complicated, lighter and less voluminous design with a reduced number of mechanical parts compared to designs like those described in the background section with reference to Fig. 1a-1c.

In a similar manner as described above with reference to Fig. 2a it is preferred that a transaxle unit 200b is formed by at least the axle arrangement 228, 228', the electric power storage 224, the electric machines 226b, 226b' and the control unit 222' (or at least the high voltage parts of the control unit 222).

In particular, it is preferred that the transaxle unit 200b is confined such that parts of the transaxle 200b comprising, using and/or transferring high voltage power are electrically isolated from the rest of the vehicle 1000a. These high voltage parts are primarily the electric power storage 224 and the electric machines 226b, 226b'. In addition, the high voltage parts may also comprise conductors and switches and similar parts of the transaxle 200b that transfer high voltage power between components of the transaxle 200b, e.g. the high voltage parts of the control unit 222'.

To achieve an electric isolation of the transaxle unit 200b it is preferred that the transaxle unit 200b (or at least the high voltage parts of the transaxle unit 200b) is kept electrically isolated within a limited volume of the vehicle 1000b in the same or similar manner as previously described above with reference to Fig. 2a, e.g. be arranged in the front half or in the rear half of the vehicle 1000a such that no high voltage parts of the transaxle 200a extends or comes into contact with the other half of the vehicle 1000a, or arranged in an electrically insulating casing 230a'.

The transaxle unit 200b may also be a separate detachable unit in the same or similar manner as the transaxle 200a previously described above with reference to Fig. 2a.

The formation of a transaxle 200b as described above provides a simpler, lighter and less voluminous design with a reduced number of mechanical parts etc in the same or similar manner as the transaxle 200a previously described above with reference to Fig. 2a.

In addition, it is preferred that the transaxle unit 200b is arranged in the vehicle 1000a such that at least the electric machines 226b, 226b' are positioned substantially along a centre axis A1 passing through the wheels 114b, 114b'. This simplifies the transfer of mechanical power between the wheels 114b, 114b' and the electrical machines 226b, 226b' respectively. In addition, the center point of gravity of the transaxle unit 200b can then more easily be set at or near the axis A1, which improves the balance of the transaxle unit 200b. This applies mutatis mutandis to the transaxle 200a previously described above with reference to Fig. 2a.

It should be added that in particular two electrical machines 226b, 226b' each connected via an axle arrangement 228, 228' respectively to a wheel 114b, 114b' makes it possible to operate the vehicle by means of torque vectoring, i.e. applying different torques to/from the wheels 228, 228' depending on the situation. One example is torque vectoring used to compensate for side wind forces. Another example is torque vectoring used to provide an improved traction. Torque vectoring can also be used to steer the vehicle or at least to assist in the steering of the vehicle.

### Operation of embodiments

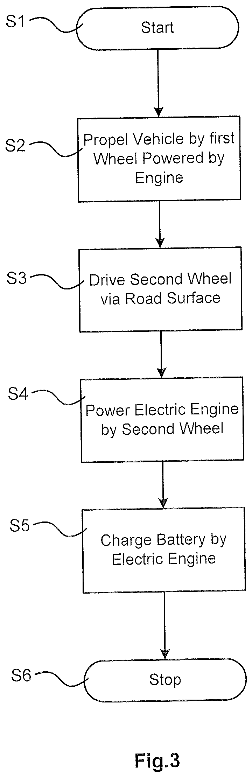

The attention is now directed to the function of an exemplifying embodiment of the present invention. The embodiment is described with reference to Fig. 2a-2b and Fig. 3 showing a flowchart illustrating the steps of an exemplifying method for charging an electric power storage 224 in a hybrid electrical vehicle 1000a, 1000b by means of at least one electrical machine 226a, 226b, 226b' mechanically powered by at least one wheel 114b, 114b' propelled via the surface on which the vehicle 1000a, 1000b is driven by at least one other wheel 114a, 114a' mechanically powered by an engine 110 such as a combustion engine or similar.

In a first step S1 of the exemplifying method it is preferred that the engine 110 of the vehicle is started. This may e.g. be performed by the driver inserting and/or turning a starter key in the ignition lock as is well known in the art.

In a second step S2 of the exemplifying method it is preferred that the vehicle is propelled over a surface by at least a first wheel 114a and/or 114a' powered by the engine 110. The surface may e.g. be a road surface or similar.

In a third step S3 of the exemplifying method it is preferred that at least a second wheel 114b and/or 114b' is driven by the surface on which the vehicle is propelled.

In a fourth step S4 of the exemplifying method it is preferred that at least one electric machine is mechanically powered by said at least one second wheel 114b, 114b'.

In a fifth step S5 of the exemplifying method it is preferred that the electric power storage 224 is electrically charged by said at least one electric machine.

In a sixth step S6 of the exemplifying method it is preferred that the charging is stopped when the power storage 224 is fully or at least substantially fully charged.

The present invention has now been described with reference to exemplifying embodiments. However, the invention is not limited to the embodiments described herein. On the contrary, the full extent of the invention is only determined by the scope of the appended claims.

## Claims

1. A transaxle arrangement (200b) adapted to be operatively mounted in an electrical vehicle (1000b) wherein the transaxle arrangement (200b) comprises an electric power storage arrangement (224), an electric machine arrangement (226b, 226b'), and a first axle arrangement (228) adapted to transfer mechanical power between the electric machine arrangement (226b, 226b') and a first wheel (114b) of the vehicle (1000b), and a second axle arrangement (228') adapted to transfer mechanical power between the electric machine arrangement (226b, 226b') and a second wheel (114b') of the vehicle (1000b), and which electric machine arrangement (226b, 226b') is adapted to operatively receive in a first phase electric power from the power storage arrangement (224) so as to provide mechanical power to the wheels (114b, 114b') and drive the vehicle (1000b), and adapted to operatively receive in a second phase mechanical power from the wheels (114b, 114b') so as to provide charging electric power to the electric power storage arrangement (224) when the vehicle (1000b) is driven,
wherein the electric machine arrangement (226b, 226b') comprises a first electrical machine (226b) connected to the first axle arrangement (228), and a second electrical machine (226b') connected to the second axle arrangement (228') such that the two electric machines (226b, 226b') are positioned substantially along a centre axis (A1) passing through the first wheel (114b) and the second wheel (114b') when the transaxle arrangement (200b) is operatively arranged in the vehicle (1000b),
the transaxle arrangement (200b) is confined such that high voltage parts (222', 224, 226b, 226b', 250) of the transaxle arrangement (200b), when it is operatively mounted on the vehicle (1000b), becomes electrically isolated from the rest of the vehicle (1000b); and that the high voltage parts (222', 224, 226b, 226b', 250) are arranged in an electrically insulating casing (230a) so as to substantially enclose the high voltage parts (222', 224, 226b, 226b', 250) of the transaxle arrangement (200b),
wherein the high voltage parts comprise the electric machine arrangement (226b, 226b'), wherein the high voltage parts (222', 224, 226b, 226b', 250) does not extend or comes into contact with the other part of the vehicle (1000b) when they are electrically isolated, and
**characterized in that**
the high voltage parts (222', 224, 226b, 226b', 250) further comprise the electrical power storage arrangement (224).

2. The transaxle arrangement (200b) according to claim 1, adapted to be operatively mounted in the front half part, or the front third part or the front fourth part of the vehicle (1000b), or in the rear half part, the third rear part or the fourth rear part of the vehicle (1000b).

3. The transaxle arrangement (200b) according to claim 1, adapted to be detachably mounted on the vehicle (1000b).

4. The transaxle arrangement (200b) according to claim 1, wherein the power storage arrangement (224) is detachably mounted in the transaxle arrangement (200b).

5. The transaxle arrangement (200b) according to claim 1, being configured such that the mechanical power transferring parts (114b, 114a', 116b, 212a) of the transaxle arrangement (200b), when it is operatively mounted on a vehicle (1000b), becomes mechanically separated from mechanical power transferring parts (112a, 114a, 114a', 116a) of the vehicle (1000b).

6. The transaxle arrangement (200b) according to claim 1, wherein the insulating casing (230a) is adapted to operatively fit to at least one of: the chassis or the body of a vehicle (1000b) so as substantially enclose the high voltage parts (222', 224, 226b, 226b', 250) of the transaxle arrangement (200b).

7. The transaxle arrangement (200b) according to claim 1, wherein the high voltage parts (222', 224, 226b, 226b', 250) further comprises at least one of: an electrical power converter, or an on board battery charger, or a climate equipment.

8. An electrical vehicle (1000b) comprising a transaxle arrangement (200b) according to any one of the preceding claims.

9. A method for operating a transaxle arrangement (200b) comprising an electric power storage arrangement (224), a first electric machine (226b) and a first axle arrangement (228) adapted to transfer mechanical power between the first electric machine (226b, 226b') and a first wheel (114b) of the vehicle (1000b), and second electric machine (226b') and a second axle arrangement (228') adapted to transfer mechanical power between the second electric machine (226b') and a second wheel (114b') of the vehicle (1000b), wherein the two electric machines (226b, 226b') are positioned substantially along a centre axis (A1) passing through the first wheel (114b) and the second wheel (114b') when the transaxle arrangement (200b) is operatively arranged in the vehicle (1000b), which method comprises the step of:
mounting the transaxle arrangement (200b) in an electrical vehicle (1000b);
the transaxle arrangement (200b) is confined such that high voltage parts (222', 224, 226b, 226b', 250) of the transaxle arrangement (200b), when it is operatively mounted on the vehicle (1000b), becomes electrically isolated from the rest of the vehicle (1000b),
arranging the high voltage parts (222', 224, 226b, 226b', 250) in an electrically insulating casing (230a) so as to substantially enclose the high voltage parts (222', 224, 226b, 226b', 250) of the transaxle arrangement (200b),
wherein the high voltage parts comprise the electric machine arrangement (226b, 226b'), wherein the high voltage parts (222', 224, 226b, 226b', 250) does not extend or comes into contact with the other part of the vehicle (1000b) when they are electrically isolated,
and
**characterized in that**
the high voltage parts (222', 224, 226b, 226b', 250) further comprise the electrical power storage arrangement (224).

10. The method according to claim 9, comprising the steps of:
in a first phase providing the electric machine arrangement (226b, 226b') with electric power from the power storage arrangement (224) so as to provide mechanical power to a wheel arrangement (114b, 114b') of the vehicle (1000b) so as to drive the vehicle (1000b), and
in a second phase receiving mechanical power from the wheel arrangement (114b, 114b') when the vehicle (1000b) is driven so as to provide charging electric power to the electric power storage arrangement (224).

11. The method according to claim 9, comprising the steps of:
mounting the transaxle arrangement (200b) in the front half part, or the front third part or the front fourth part of the vehicle (1000b), or in the rear half part, the third rear part or the fourth rear part of the vehicle (1000b).

12. The method according to claim 9, comprising the steps of:
mounting the transaxle arrangement (200b) in a detachable manner.

13. The method according to claim 9, comprising the steps of:
mounting the power storage arrangement (224) in the transaxle arrangement (200b) in a detachable manner.

14. The method according to claim 9, comprising the steps of:
configuring the transaxle arrangement (200b) such that the mechanical power transferring parts (114b, 114a', 116b, 212a) of the transaxle arrangement (200b) are mechanically separated from mechanical power transferring parts (112a, 114a, 114a', 116a) of the vehicle (1000b).

15. The method according to claim 9, comprising the steps of:
fitting the insulating casing (230a) to at least one of: the chassis or the body of the vehicle (1000b) so as to substantially enclose the high voltage parts (222', 224, 226b, 226b', 250) of the transaxle arrangement (200b).

16. The method according to claim 9, comprising the steps of:
arranging as a high voltage part (222', 224, 226b, 226b', 250) at least one of: an electrical power converter, or an on board battery charger, or a climate equipment.

## Patentansprüche

1. Transaxlevorrichtung (200b) eingerichtet, um operativ in einem elektrischen Fahrzeug (1000b) montiert zu werden, wobei die Transaxlevorrichtung (200b) eine elektrische Leistungsspeichervorrichtung (224), eine elektrische Maschinenvorrichtung (226b, 226b'), und eine erste Achsenvorrichtung (228) umfasst, die eingerichtet ist, eine mechanische Leistung zwischen der elektrischen Maschinenvorrichtung (226b, 226b') und einem ersten Rad (114b) des Fahrzeugs (1000b) zu transferieren, und einer zweiten Achsenvorrichtung (228'), die eingerichtet ist, mechanische Leistung zwischen der elektrischen Maschinenvorrichtung (226b, 226b') und einem zweiten Rad (114b') des Fahrzeugs (1000b) zu transferieren, und wobei die elektrische Maschinenvorrichtung (226b, 226b') eingerichtet ist, operativ in einer ersten Phase elektrische Leistung von der Leistungsspeichervorrichtung (224) zu empfangen, um mechanische Leistung an die Räder (114b, 114b') bereitzustellen und das Fahrzeug (1000b) anzutreiben und die eingerichtet ist, operativ in einer zweiten Phase mechanische Leistung von den Rädern (114b, 114b') zu empfangen, um elektrische Aufladeleistung an die elektrische Leistungsspeichervorrichtung (224) bereitzustellen, wenn das Fahrzeug (1000b) gefahren wird,
wobei die elektrische Maschinenvorrichtung (226b, 226b') eine erste elektrische Maschine (226b), die mit der ersten Achsenvorrichtung (228) verbunden ist, und eine zweite elektrische Maschine (226b'), die mit der zweiten Achsenvorrichtung (228') verbunden ist, umfasst, sodass die zwei elektrischen Maschinen (226b, 226b') im Wesentlichen entlang einer zentralen Achse (A1) positioniert sind, die durch das erste Rad (114b) und das zweite Rad (114b') verläuft, wenn die Transaxlevorrichtung (200b) operativ in dem Fahrzeug (1000b) angeordnet ist,
wobei die Transaxlevorrichtung (200b) beschränkt ist, sodass Hochspannungsteile (222', 224, 226b, 226b' 250) der Transaxlevorrichtung (200b), wenn sie operativ auf dem Fahrzeug (1000b) angeordnet ist, elektrisch von dem Rest des Fahrzeugs (1000b) isoliert wird; und sodass die Hochspannungsteile (222', 224, 226b, 226b', 250) in einem elektrisch isolierenden Gehäuse (230a) angeordnet sind, sodass die Hochspannungsteile (222', 224, 226b, 226b', 250) der Transaxlevorrichtung (200b) im Wesentlichen eingeschlossen sind,
wobei die Hochspannungsteile die elektrische Maschinenvorrichtung (226b, 226b') umfassen,
wobei die Hochspannungsteile (222', 224, 226b, 226b', 250) sich nicht in die anderen Teile des Fahrzeugs (1000b) erstrecken oder mit diesen in Kontakt kommen, wenn diese elektrisch isoliert sind, und
**dadurch gekennzeichnet, dass**
die Hochspannungsteile (222', 224, 226b, 226b', 250) weiterhin die elektrische Leistungsspeichervorrichtung (224) umfassen.

2. Transaxlevorrichtung (200b) nach Anspruch 1, eingerichtet, um operativ in dem vorderen halben Teil montiert zu werden, oder dem vorderen Drittel oder dem vorderen Viertel des Fahrzeugs (1000b), oder dem hinteren halben Teil, dem hinteren Drittel oder dem hinteren Viertel des Fahrzeugs (1000b).

3. Transaxlevorrichtung (200b) nach Anspruch 1, eingerichtet um abnehmbar an dem Fahrzeug (1000b) montiert zu werden.

4. Transaxlevorrichtung (200b) nach Anspruch 1, wobei die Leistungsspeichervorrichtung (224) abnehmbar in der Transaxlevorrichtung (200b) montiert ist.

5. Transaxlevorrichtung (200b) nach Anspruch 1, eingerichtet, sodass die mechanischen Leistungstransferteile (114b, 114a', 116b, 212a) der Transaxlevorrichtung (200b), wenn sie operativ auf einem Fahrzeug (1000b) montiert ist, mechanisch von den mechanischen Leistungstransferteilen (112a, 114a, 114a', 116a) des Fahrzeugs (1000b) getrennt werden.

6. Transaxlevorrichtung (200b) nach Anspruch 1, wobei das isolierende Gehäuse (230a) eingerichtet ist, operativ mindestens einem aus: dem Chassis oder dem Körper des Fahrzeugs (1000b) zu entsprechen, um die Hochspannungsteile (222', 224, 226b, 226b', 250) der Transaxlevorrichtung (200b) im Wesentlichen einzuschließen.

7. Transaxlevorrichtung (200b) nach Anspruch 1, wobei die Hochspannungsteile (222', 224, 226b, 226b', 250) weiterhin mindestens eins aus: einem elektrischen Leistungswandler oder einem Bordbatterieladegerät oder einem Klimaequipment umfassen.

8. Elektrisches Fahrzeug (1000b) umfassend eine Transaxlevorrichtung (200b) nach einem der vorhergehenden Ansprüche.

9. Verfahren zum Betreiben einer Transaxlevorrichtung (200b) umfassend eine elektrische Leistungsspeichervorrichtung (224), eine erste elektrische Maschine (226b) und eine erste Achsenvorrichtung (228) eingerichtet, um mechanische Leistung zwischen der ersten elektrischen Maschine (226b, 226b') und einem ersten Rad (114b) des Fahrzeugs (1000b) zu transferieren, und eine zweite elektrische Maschine (226b') und eine zweite Achsenvorrichtung (228') eingerichtet, um mechanische Leistung zwischen der zweiten elektrischen Maschine (226b') und einem zweiten Rad (114b') des Fahrzeugs (1000b) zu transferieren, wobei die zwei elektrischen Maschinen (226b, 226b') im Wesentlichen entlang einer zentralen Achse (A1) positioniert sind, die durch das erste Rad (114b) und das zweite Rad (114b') verläuft, wenn die Transaxlevorrichtung (200b) operativ in dem Fahrzeug (1000b) angeordnet ist, wobei das Verfahren die folgenden Schritte umfasst:
Montieren der Transaxlevorrichtung (200b) in einem elektrischen Fahrzeug (1000b);
die Transaxlevorrichtung (200b) ist eingeschlossen, sodass Hochspannungsteile (222', 224, 226b, 226b', 250) der Transaxlevorrichtung (200b), wenn sie operativ an dem Fahrzeug (1000b) montiert ist, elektrisch isoliert von dem Rest des Fahrzeugs (1000b) werden,
Anordnen der Hochspannungsteile (222', 224, 226b, 226b', 250) in einem elektrisch isolierenden Gehäuse (230a), um die Hochspannungsteile (222', 224, 226b, 226b', 250) der Transaxlevorrichtung (200b) im Wesentlichen einzuschließen,
wobei die Hochspannungsteile die elektrische Maschinenvorrichtung (226b, 226b') umfassen,
wobei die Hochspannungsteile (222', 224, 226b, 226b', 250) sich nicht in die anderen Teile des Fahrzeugs (1000b) erstrecken oder mit diesen in Kontakt kommen, wenn sie elektrisch isoliert sind, und
**dadurch gekennzeichnet, dass**
die Hochspannungsteile (222', 224, 226b, 226b', 250) weiterhin die elektrische Leistungsspeichervorrichtung (224) umfassen.

10. Verfahren nach Anspruch 9, umfassend die Schritte:
in einer ersten Phase Versorgen der elektrischen Maschinenvorrichtung (226b, 226b') mit elektrischer Leistung aus der Leistungsspeichervorrichtung (224), um mechanische Leistung an eine Radvorrichtung (114b, 114b') des Fahrzeugs (1000b) bereitzustellen, um das Fahrzeug (1000b) anzutreiben, und
in einer zweiten Phase Empfangen von mechanischer Leistung von der Radvorrichtung (114b, 114b'), wenn das Fahrzeug (1000b) gefahren wird, um elektrische Leistungsaufladung an die elektrische Leistungsspeichervorrichtung (224) bereitzustellen.

11. Verfahren nach Anspruch 9, umfassend die Schritte:
Montieren der Transaxlevorrichtung (200b) in dem vorderen halben Teil oder dem vorderen Drittel oder dem vorderen Viertel des Fahrzeugs (1000b) oder in dem hinteren halben Teil, dem hinteren Drittel oder dem hinteren Viertel des Fahrzeugs (1000b).

12. Verfahren nach Anspruch 9, umfassend die Schritte:
Montieren der Transaxlevorrichtung (200b) in einer abnehmbaren Weise.

13. Verfahren nach Anspruch 9, umfassend die Schritte:
Montieren der Leistungsspeichervorrichtung (224) in der Transaxlevorrichtung (200b) in einer abnehmbaren Weise.

14. Verfahren nach Anspruch 9, umfassend die Schritte:
Konfigurieren der Transaxlevorrichtung (200b), sodass die mechanischen Leistungstransferteile (114b, 114a', 116b, 212a) der Transaxlevorrichtung (200b) mechanisch von den mechanischen Leistungstransferteilen (112a, 114a, 114a', 116a) des Fahrzeugs (1000b) getrennt sind.

15. Verfahren nach Anspruch 9, umfassend die Schritte:
Anpassen des isolierenden Gehäuses (230a) an mindestens eines aus: dem Chassis oder dem Körper des Fahrzeugs (1000b), um die Hochspannungsteile (222', 224, 226b, 226b', 250) der Transaxlevorrichtung (200b) im Wesentlichen zu umschließen.

16. Verfahren nach Anspruch 9, umfassend die Schritte:
Anordnen als ein Hochspannungsteil (222', 224, 226b, 226b', 250) von mindestens einem aus: einem elektrischen Leistungswandler oder einem Bordbatterieladegerät oder einem Klimaequipment.

## Revendications

1. Agencement de boîte-pont (200b) adapté pour être monté en fonctionnement dans un véhicule électrique (1000b), dans lequel l'agencement de boîte-pont (200b) comprend un agencement de stockage de puissance électrique (224), un agencement de machine électrique (226b, 226b') et un premier agencement d'essieu (228) adapté pour transférer la puissance mécanique entre l'agencement de machine électrique (226b, 226b') et une première roue (114b) du véhicule (1000b), et un second agencement d'essieu (228') adapté pour transférer la puissance mécanique entre l'agencement de machine électrique (226b, 226b') et une seconde roue (114b') du véhicule (1000b), et lequel agencement de machine électrique (226b, 226b') est adapté pour recevoir en fonctionnement dans une première phase la puissance électrique de l'agencement de stockage de puissance (224) de sorte à fournir une puissance mécanique aux roues (114b, 114b') et entraîner le véhicule (1000b), et adapté pour recevoir en fonctionnement dans une seconde phase la puissance mécanique des roues (114b, 114b') de sorte à fournir une puissance électrique de chargement à l'agencement de stockage de puissance électrique (224) lorsque le véhicule (1000b) est entraîné,
dans lequel l'agencement de machine électrique (226b, 226b') comprend une première machine électrique (226b) reliée au premier agencement d'essieu (228), et une seconde machine électrique (226b') reliée au second agencement d'essieu (228') de sorte que les deux machines électriques (226b, 226b') soient positionnées sensiblement le long d'un axe central (A1) passant au travers de la première roue (114b) et la seconde roue (114b') lorsque l'agencement de boîte-pont (200b) est agencé en fonctionnement dans le véhicule (1000b),
l'agencement de boîte-pont (200b) est confiné de sorte que des parties haute tension (222', 224, 226b, 226b', 250) de l'agencement de boîte-pont (200b) lorsqu'il est monté en fonctionnement sur le véhicule (1000b), deviennent isolées électriquement du reste du véhicule (1000b) ; et en ce que les parties haute tension (222', 224, 226b, 226b', 250) sont agencées dans un boîtier isolant électriquement (230a) de sorte à enfermer sensiblement les parties haute tension (222', 224, 226b, 226b', 250) de l'agencement de boîte-pont (200b),
dans lequel les parties haute tension comprennent l'agencement de machine électrique (226b, 226b'),
dans lequel les parties haute tension (222', 224, 226b, 226b', 250) ne s'étendent pas ou viennent en contact avec l'autre partie du véhicule (1000b) lorsqu'elles sont isolées électriquement, et
**caractérisé en ce que**
les parties haute tension (222', 224, 226b, 226b', 250) comprennent en outre l'agencement de stockage de puissance électrique (224).

2. Agencement de boîte-pont (200b) selon la revendication 1, adapté pour être monté en fonctionnement dans la demi-partie avant ou la troisième partie avant ou la quatrième partie avant du véhicule (1000b) ou dans la demi-partie arrière, la troisième partie arrière ou la quatrième partie arrière du véhicule (1000b).

3. Agencement de boîte-pont (200b) selon la revendication 1, adapté pour être monté de manière détachable sur le véhicule (1000b).

4. Agencement de boîte-pont (200b) selon la revendication 1, dans lequel l'agencement de stockage de puissance (224) est monté de manière détachable dans l'agencement de boîte-pont (200b).

5. Agencement de boîte-pont (200b) selon la revendication 1, étant configuré de sorte que les parties de transfert de puissance mécanique (114b, 114a', 116b, 212a) de l'agencement de boîte-pont (200b) lorsqu'il est monté en fonctionnement sur un véhicule (1000b), deviennent séparées mécaniquement des parties de transfert de puissance mécanique (112a, 114a, 114a', 116a) du véhicule (1000b).

6. Agencement de boîte-pont (200b) selon la revendication 1, dans lequel le boîtier isolant (230a) est adapté pour s'insérer en fonctionnement dans au moins un parmi : le châssis ou le corps d'un véhicule (1000b) de sorte à enfermer sensiblement les parties haute tension (222', 224, 226b, 226b', 250) de l'agencement de boîte-pont (200b).

7. Agencement de boîte-pont (200b) selon la revendication 1, dans lequel les parties haute tension (222', 224, 226b, 226b', 250) comprennent en outre au moins un parmi :
un convertisseur de puissance électrique, ou un chargeur de batterie embarqué ou un équipement climatiseur.

8. Véhicule électrique (1000b) comprenant un agencement de boîte-pont (200b) selon l'une quelconque des revendications précédentes.

9. Procédé de fonctionnement d'un agencement de boîte-pont (200b) comprenant un agencement de stockage de puissance électrique (224), une première machine électrique (226b) et un premier agencement d'essieu (228) adapté pour transférer la puissance mécanique entre la première machine électrique (226b, 226b') et une première roue (114b) du véhicule (1000b), et une seconde machine électrique (226b') et un second agencement d'essieu (228') adapté pour transférer la puissance mécanique entre la seconde machine électrique (226b') et une seconde roue (114b') du véhicule (1000b), dans lequel les deux machines électriques (226b, 226b') sont positionnées sensiblement le long d'un axe central (A1) passant au travers de la première roue (114b) et la seconde roue (114b') lorsque l'agencement de boîte-pont (200b) est agencé en fonctionnement dans le véhicule (1000b), lequel procédé comprend l'étape de :
montage de l'agencement de boîte-pont (200b) dans un véhicule électrique (1000b) ;
l'agencement boîte-pont (200b) est confiné de sorte que des parties haute tension (222', 224, 226b, 226b', 250) de l'agencement de boîte-pont (200b) lorsqu'il est monté en fonctionnement sur le véhicule (1000b), deviennent isolées électriquement du reste du véhicule (1000b),
agencement des parties haute tension (222', 224, 226b, 226b', 250) dans un boîtier isolant électriquement (230a) de sorte à enfermer sensiblement les parties haute tension (222', 224, 226b, 226b', 250) de l'agencement de boîte-pont (200b),
dans lequel les parties haute tension comprennent l'agencement de machine électrique (226b, 226b'),
dans lequel les parties haute tension (222', 224, 226b, 226b', 250) ne s'étendent pas ou viennent en contact avec l'autre partie du véhicule (1000b) lorsqu'elles sont isolées électriquement, et
**caractérisé en ce que**
les parties haute tension (222', 224, 226b, 226b', 250) comprennent en outre l'agencement de stockage de puissance électrique (224).

10. Procédé selon la revendication 9, comprenant l'étape de :
dans une première phase, fourniture de l'agencement de machine électrique (226b, 226b') avec une puissance électrique de l'agencement de stockage de puissance (224) de sorte à fournir une puissance mécanique à un agencement de roue (114b, 114b') du véhicule (1000b) de sorte à entraîner le véhicule (1000b) et
dans une seconde phase, réception de la puissance mécanique de l'agencement de roue (114b, 114b') lorsque le véhicule (1000b) est entraîné de sorte à fournir une puissance électrique de chargement à l'agencement de stockage de puissance électrique (224).

11. Procédé selon la revendication 9, comprenant les étapes de :
montage de l'agencement de boîte-pont (200b) dans la demi-partie avant ou la troisième partie avant ou la quatrième partie avant du véhicule (1000b) ou dans la demi-partie arrière, la troisième partie arrière ou la quatrième partie arrière du véhicule (1000b).

12. Procédé selon la revendication 9, comprenant les étapes de :
montage de l'agencement de boîte-pont (200b) de manière détachable.

13. Procédé selon la revendication 9, comprenant les étapes de :
montage de l'agencement de stockage de puissance (224) dans l'agencement de boîte-pont (200b) de manière détachable.

14. Procédé selon la revendication 9, comprenant les étapes de :
configuration de l'agencement de boîte-pont (200b) de sorte que les parties de transfert de puissance mécanique (114b, 114a', 116b, 212a) de l'agencement de boîte-pont (200b) soient mécaniquement séparées des parties de transfert de puissance mécanique (112a, 114a, 114a', 116a) du véhicule (1000b).

15. Procédé selon la revendication 9, comprenant les étapes de :
insertion du boîtier isolant (230a) dans au moins un parmi : le châssis ou le corps du véhicule (1000b) de sorte à enfermer sensiblement les parties haute tension (222', 224, 226b, 226b', 250) de l'agencement de boîte-pont (200b).

16. Procédé selon la revendication 9, comprenant les étapes de :
agencement comme une partie haute tension (222', 224, 226b, 226b', 250) d'au moins un parmi : un convertisseur de puissance électrique ou un chargeur de batterie embarqué ou un équipement climatiseur.
